# EUROPÄISCHE PATENTSCHRIFT

(11) **EP 2 176 351 B1**
(45) Veröffentlichungstag und Bekanntmachung des Hinweises auf die Patenterteilung: **18.09.2013**
(21) Anmeldenummer: 08786566.3
(22) Anmeldetag: 29.07.2008
(51) Int. Cl.: C08L 83/08, C08L 83/04

(54) **VERNETZBARE MASSEN AUF DER BASIS VON ORGANOSILICUMVERBINDUNGEN**
CROSS-LINKABLE MASSES BASED ON ORGANOSILICON COMPOUNDS
COMPOSITIONS RÉTICULABLES À BASE DE COMPOSÉS D'ORGANOSILICIUM

(30) Priorität: 07.08.2007 DE 102007037197
(43) Veröffentlichungstag der Anmeldung: 21.04.2010
(73) Patentinhaber: Wacker Chemie AG, 81737 München (DE)
(72) Erfinder: SCHEIM, Uwe, 01640 Coswig (DE); SCHINDLER, Wolfram, 84577 Tüssling (DE); SCHÖLEY, Peter, 01665 Diera-Zehren (DE); STANJEK, Volker, 84539 Ampfing (DE)
(74) Vertreter: Budczinski, Angelika
(86) Internationale Anmeldenummer: PCT/EP2008/059928
(87) Internationale Veröffentlichungsnummer: WO 2009/019165

(56) Entgegenhaltungen:
- EP-A- 0 885 931
- WO-A-2005/108495

## Beschreibung

Die Erfindung betrifft vernetzbare Massen auf der Basis von Organosiliciumverbindungen, die heterocyclische Verbindungen enthalten, Verfahren zu deren Herstellung sowie deren Verwendung.

Unter Ausschluss von Wasser lagerfähige, bei Zutritt von Wasser bei Raumtemperatur zu Elastomeren vulkanisierende Einkomponenten-Dichtmassen (RTV-1) sind seit langem bekannt. Diese Produkte werden in großen Mengen zum Beispiel in der Bauindustrie, eingesetzt. Die Basis dieser Mischungen sind Polymere, die durch Silylgruppen terminiert sind, die reaktive Substituenten wie OH-Gruppen oder hydrolysierbare Gruppen, wie zum Beispiel Alkoxygruppen, tragen. Des Weiteren können diese Dichtmassen Füllstoffe, Weichmacher, Vernetzer, Katalysatoren sowie Additive enthalten.

In DE 197 25 501 C1 sind alkoxyvernetzende RTV1-Siliconkautschuk-Mischungen beschrieben, die neben hydroxyterminiertem Polydiorganosiloxan mit Heterocyclen substituierte Alkoxysilane enthalten, wie z.B. N-1-(Triethoxysilyl)ethylsuccinimid oder N-[1-(Triethoxysilyl)ethyl]pyrrolidon-(2). Unter Verwendung dieser Verbindungen lassen sich zwar gut Massen herstellen, deren Reaktivität gegenüber konventionellen Massen soweit gesteigert ist, dass auch ethoxysubstituierte Verbindungen eingesetzt werden können. Sie sind jedoch immer noch so langsam, dass für die Reaktion des Silans mit dem hydroxyterminiertem Polydiorganosiloxan die Verwendung von Katalysatoren erforderlich ist und dass große Mengen an Vernetzungskatalysatoren eingesetzt werden müssen, um eine genügende Härtungsgeschwindigkeit der vernetzbaren Massen zu erreichen.

Gegenstand der Erfindung sind durch Kondensationsreaktion vernetzbare Massen herstellbar unter Verwendung von
(A) Organosiliciumverbindung mit mindestens zwei OH-Gruppen mit einer Viskosität von 10³ bis 10⁶ mPas bei 25 °C,
(B) heterocyclischen Verbindungen der Formel

   A [CR¹₂SiRₐ (OR²)₃₋ₐ]ₓ (I),

   wobei
   A einen auf einem Heterocyclus AHₓ basierenden Rest darstellt, enthaltend mindestens ein ringbildendes Element der 3. und/oder 5. Hauptgruppe, bei dem x Wasserstoffatome durch chemische Bindungen zum CR¹₂-Rest ersetzt sind, wobei sich mindestens eine dieser Bindungen an einem ringbildenden Element der 3. oder 5. Hauptgruppe befindet, mit der Maßgabe, dass Rest A keine Ringkohlenstoffatome mit über Doppelbindung gebundenen Sauerstoff- oder Svhwafelatomen enthält, die eine direkte Bindung zu einem ringbildenden Heteroatom der 3. oder 5. Hauptgruppe, welches an einen CR¹₂-Rest der Formel (I) gebunden ist, haben,
   R gleiche oder verschiedene, einwertige, gegebenenfalls substituierte Kohlenwasserstoffreste bedeutet,
   R⁻ gleich oder verschieden sein kann und Wasserstoffatom oder einwertige, gegebenenfalls substituierte Kohlenwasserstoffreste bedeutet,
   R² gleich oder verschieden sein kann und einwertige, gegebenenfalls substituierte Kohlenwasserstoffreste bedeutet,
   a gleich 0 oder 1, bevorzugt 0, ist und
   x gleich 1, 2 oder 3, bevorzugt 1 oder 2, besonders bevorzugt 1, ist,
   und/oder deren Teilhydrolysate,
   gegebenenfalls
(C) weitere Vernetzer,
   gegebenenfalls
(E) basischen Stickstoff aufweisende Verbindung,
   gegebenenfalls
(F) Füllstoffe,
   gegebenenfalls
(G) Haftvermittler,
   gegebenenfalls
(H) Weichmacher und
   gegebenenfalls
(I) Additive.

Bei den Teilhydrolysaten der Verbindungen der Formel (I) kann es sich um Teilhomohydrolysate handeln wie auch um Teilcohydrolysate. Falls es sich bei der erfindungsgemäß eingesetzten Komponente (B) um Teilhydrolysate der Verbindungen der Formel (I) handelt, sind solche mit bis zu 10 Siliciumatomen bevorzugt.

Bevorzugt handelt es sich bei Rest R um gegebenenfalls substituierte, einwertige Kohlenwasserstoffreste mit 1 bis 18 Kohlenstoffatomen, besonders bevorzugt um Alkylreste, den Vinyl-, den 3,3,3-Trifluorprop-1-yl- und den Phenylrest, insbesondere um den Methylrest.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluorprop-1-ylrest, der 1,1,1,3,3,3-Hexafluorprop-2-ylrest und der Heptafluorprop-2-ylrest, Halogenarylreste, wie der o-, m- und p-Chlorphenylrest, und der 2-Methoxyethylrest, der 2-Methoxyprop-1-ylrest sowie der 2-(2-Methoxyethoxy)ethylrest.

Beispiele für Reste R¹ sind Wasserstoffatom sowie die für R angegebenen Reste.

Bevorzugt handelt es sich bei Rest R¹ um Wasserstoffatom und Kohlenwasserstoffreste mit 1 bis 20 Kohlenstoffatomen, insbesondere um Wasserstoffatom.

Beispiele für Reste R² sind die für R angegebenen Reste.

Bevorzugt handelt es sich bei Rest R² um Alkylreste mit 1 bis 6 Kohlenstoffatomen, besonders bevorzugt um den Methyl- und Ethylrest, insbesondere um den Ethylrest.

Bei Rest A handelt es sich um cyclische Verbindungen mit ringbildenden Atomen aus mindestens zwei verschiedenen Elementen, mit der Maßgabe, dass mindestens ein ringbildendes Atom ein Element der 3. und/oder 5. Hauptgruppe darstellt, welches eine Bindungsstelle zum Kohlenstoffatom des Rests -CR¹₂- in Formel (I) aufweist, mit der Maßgabe, dass Rest A keine Ringkohlenstoffatome mit über Doppelbindung gebundenen Sauerstoff- oder Schwefelatomen enthält, die eine direkte Bindung zu einem ringbildenden Heteroatom der 3. oder 5. Hauptgruppe, welches an einen CR¹₂-Rest der Formel (I) gebunden ist, haben.

Bevorzugt handelt es sich bei Rest A um cyclische organische Verbindungen, deren Ringstrukturen neben Kohlenstoffatomen noch mindestens ein Element der 3. und/oder 5. Hauptgruppe und besonders bevorzugt mindestens ein weiteres Heteroatom enthalten.

Im Folgenden soll unter der Bezeichnung "Heteroatome" alle ringbildenden Atome außer Kohlenstoff verstanden werden.

Bei den ringbildenden Heteroatomen in Rest A handelt es sich bevorzugt um Stickstoff, Phosphor, Sauerstoff, Silicium und Schwefel, besonders bevorzugt um Stickstoff und Sauerstoff.

Bei Rest A kann es sich auch um gegebenenfalls substituierte, gesättigte oder teilweise ungesättigte Heterocyclen handeln. Falls der Ring A substituiert ist, handelt es sich bei den Substituenten bevorzugt um Halogenatome, Kohlenwasserstoffreste und Organyloxyreste, wobei es sich bei diesen Substituenten um mehrwertige Reste handeln kann, die an einem oder mehreren ringbildenden Atomen gebunden sein können.

Rest A kann auch Ringkohlenstoffatome mit über Doppelbindung gebundenen Sauerstoff- oder Schwefelatomen enthalten, mit der Maßgabe, dass solche Ringkohlenstoffatome keine direkte Bindung zu einem ringbildenden Heteroatom der 3. oder 5. Hauptgruppe, welches an einen CR¹₂-Rest der Formel (I) gebunden ist, haben.

Es können im Rest A auch Ringkohlenstoffatome mit über Doppelbindung gebundenen Stickstoff- oder Phosphoratomen enthalten sein, was jedoch nicht bevorzugt ist.

Bei Rest A handelt es sich bevorzugt um 3-, 4-, 5-, 6-, 7- oder 8-gliedrige Heterocyclen, die als ringbildende Atome neben Kohlenstoff Stickstoff und/oder Phosphor und/oder Sauerstoff und/oder Schwefel als Heteroatom aufweisen, mit der Maßgabe, dass mindestens ein ringbildendes Atom ein Element der 3. und/oder 5. Hauptgruppe darstellt, wobei auch weitere Ringe annelliert sein können.

Besonders bevorzugt handelt es sich bei den Heterocyclen, auf denen die Reste A basieren, um 5- und 6-gliedrige Heterocyclen, die neben dem zur Bindung zum CR¹₂-Rest der Verbindungen der Formel (I) benötigten Heteroatom der 3. und/oder 5. Hauptgruppe ein weiteres Ringheteroatom enthalten.

Beispiele für Heterocyclen, auf welchen die Reste A basieren, sind Aziridin, Azetidin, Pyrrol, Pyrrolidin, 1,3-Oxazolidin, 1,3-Thiazolidin, 1H-1,2-Diazol, Δ²-1,2-Diazolin, Δ⁴-1,2-Diazolin, 1,3-Diazol, Δ²-1,3-Diazolin, Δ⁴-1,3-Diazolin, 1,3-Diazolidin, 1,2,3-Triazol, 1,2,4-Triazol, Tetrazol, Δ⁴-1,2-Diazolin-3-on, Piperidin, Tetrahydro-1,4-oxazin, Tetrahydro-1,4-thiazin, Hexahydro-1,3-diazin, Hexahydro-1,4-diazin, 1-Methylhexahydro-1,4-diazin, Hexahydro-1,3,5-triazin, Hexahydro-1,3-diazin-4-on, 4-Methylhexahydro-1,4-diazin-3-on, 1H-Azepin, Hexahydroazepin, Octahydroazocin, 1H-Benzo[b]pyrrol, 2,3-Dihydrobenzo[b]pyrrol, 9H-Dibenzopyrrol, Benzo[d]-1,2-diazol, Benzo[d]-1,3-diazol und Benzo[d]-1,2,3-triazol.

Besonders bevorzugt sind Pyrrolidin, Piperidin, Tetrahydro-1,4-oxazin, Tetrahydro-1,4-thiazin, Tetrahydro-1,4-diazin und 1-Methyltetrahydro-1,4-diazin, insbesondere Tetrahydro-1,4-oxazin.

Beispiele für heterocyclische Verbindungen (B) sind 1-(Triethoxysilylmethyl)aziridin, 1-(Triethoxysilylmethyl)azetidin, 1-(Triethoxysilylmethyl)pyrrol, 1-(Triethoxysilylmethyl)pyrrolidin, 3-(Triethoxysilylmethyl)-1,3-oxazolidin, 3-(Triethoxysilylmethyl)-1,3-thiazolidin, 1-(Triethoxysilylme-thyl)-1H-1,2-diazol, 1-(Triethoxysilylmethyl)-Δ²-1,2-diazolin, 1-(Triethoxysilylmethyl)-Δ⁴-1,2-diazolin, 1-(Triethoxysilylmethyl)-1,3-diazol, 1-(Triethoxysilylmethyl)-Δ²-1,3-diazolin, 1-(Triethoxysilylmethyl)-Δ⁴-1,3-diazolin, 1-(Triethoxysilylmethyl)-1,3-diazolidin, 1,3-Bis(Triethoxysilylmethyl)-1,3-diazolidin, 1-(Triethoxysilylmethyl)-1-1,2,3-triazol, 2-(Triethoxysilylmethyl)-2H-1,2,3-triazol, 1-(Triethoxysilylmethyl)-1H-1,2,4-triazol, 4-(Triethoxysilylmethyl)-4H-1,2,4-triazol, 1-(Triethoxysilylmethyl)-1H-tetrazol, 2-(Triethoxysilylmethyl)-2H-tetrazol, 1-(Triethoxysilylmethyl)-Δ⁴1,2-diazolin-3-on, 1-(Triethoxysilylmethyl)piperidin, 4-(Triethoxysilylmethyl)tetrahydro-1,4-oxazin, 4-(1-(Triethoxysilyl)ethyl)tetrahydro-1,4-oxazin, 4-(2-(Triethoxysilyl)prop-2-yl)tetrahydro-1,4-oxazin, 4-(1-Phenyl-1-(triethoxysilyl)ethyl)tetrahydro-1,4-oxazin, 4-(Triethoxysilylmethyl)tetrahydro-1,4-thiazin, 1-(Triethoxysilylmethyl)hexahydro-1,3-diazin, 1-(Triethoxysilylmethyl)hexahydro-1,4-diazin, 1-Methyl-4-(Triethoxysilylmethyl)hexahydro-1,4-diazin, 1,4-Bis(triethoxysilylmethyl)hexahydro-1,4-diazin, 1,4-Bis(1-(triethoxysilyl)ethyl)hexahydro-1,4-diazin, 1-(Triethoxysilylmethyl)hexahydro-1,3,5-triazin, 1,3-Bis(triethoxysilylmethyl)hexahydro-1,3,5-triazin, 1,3,5-Tris(triethoxysilylmethyl)hexahydro-1,3,5-triazin, 1-(Triethoxysilylmethylhexahydro-1,3-diazin-4-on, 1-(Triethoxysilylmethyl)-4-methylhexahydro-1,4-diazin-3-on, 1-(Triethoxysilylmethyl)-1H-azepin, l-(Triethoxysilylmethyl)hexahydroazepin, 1-(Triethoxysilylmethyl)octahydroazocin, 1-(Triethoxysilylmethyl)benzo[b]pyrrol, 1-(Triethoxysilylmethyl)-2,3-dihydrobenzo[b]pyrrol, 9-(Triethoxysilylmethyl)dibenzopyrrol, 1-(Triethoxysilylmethyl)benzo[d]-12-diazol, 1-(Triethoxysilylmethyl)benzo[d] - 1,3-diazol und 1-(Triethoxysilylmethyl)benzo[d]-1,2,3,triazol. Weitere Beispiele sind alle oben genannten Verbindungen, bei denen der Triethoxysilylrest durch Trimethoxysilylrest, Diethoxymethylsilylrest oder Dimethoxymethylsilylrest ersetzt ist.

Die erfindungsgemäß eingesetzten heterocyclischen verbindungen (B) sind handelsübliche Verbindungen bzw. nach in der Chemie gängigen Verfahren herstellbar.

Zusätzlich zu der oben beschriebenen Komponente (B) können die erfindungsgemäßen Massen nun alle Stoffe enthalten, die auch bisher in durch Kondensationsreaktion vernetzbaren Massen eingesetzt worden sind, wie z.B. Organosiliciumverbindung mit mindestens zwei kondensationsfähigen Gruppen (A), weitere Vernetzer (C), Katalysatoren (D), basischen Stickstoff aufweisende Verbindung (E), Füllstoffe (F), Haftvermittler (G), Weichmacher (H) und Additive (I), wobei (C), (E) und (G) verschieden sind zu Komponente (B).

Bei den erfindungsgemäß eingesetzten Organosiliciumverbindungen (A) kann es sich um alle Organosiliciumverbindungen mit mindestens zwei OH-Gruppen und mit einer Viskosität von 10³ bis 10⁶ mPas bei 25 °C handeln, die auch bisher in durch Kondensationsreaktion vernetzbaren Massen eingesetzt worden sind.

Häufig wurde in der Literatur bisher unterschieden zwischen Dichtmassen, die unter Verwendung von Polymeren mit OH-Gruppen oder Polymeren, die hydrolysefähige Gruppen tragen, hergestellt worden sind. Die durch Kondensationsreaktion vernetzbaren Massen enthalten jedoch als vernetzenden Bestandteil im Allgemeinen mindestens ein Polysiloxan mit hydrolysefähigen Gruppen. Darüber hinaus sind meist noch monomere oder oligomere Silane enthalten, die ebenfalls hydrolysefähige Gruppen tragen. Um zu vernetzten Strukturen zu kommen, müssen pro Molekül mindestens zwei solcher vernetzungsfähigen Gruppen enthalten sein. Es ist vollkommen unerheblich, ob die erwähnten vernetzungsfähigen Polymere dadurch gebildet werden, dass Polymere mit OH-Gruppen während der Herstellung der Dichtmasse durch Reaktion mit z.B. den zugesetzten Silanen, die vernetzungsfähige Gruppen tragen, erhalten werden, oder ob solche Polymere in einem separaten Schritt vorher hergestellt worden sind.

Bevorzugt handelt es sich bei den erfindungsgemäß eingesetzten organosiliciumverbindungen (A) um solche enthaltend Einheiten der Formel

R³_{b}(OH)_{c}SiO_{(4-b-c)/2} (II),

wobei
R³ gleich oder verschieden sein kann und gegebenenfalls substituierte Kohlenwasserstoffreste, die durch Sauerstoffatome unterbrochen sein können, bedeutet,
b 0, 1, 2 oder 3, bevorzugt 2, ist und
c 0, 1, 2 oder 3, bevorzugt 0 oder 1, ist,
mit der Maßgabe, dass die Summe aus b+c≤3 ist und pro Molekül mindestens zwei kondensationsfähige Reste OH anwesend sind, mit einer Viskosität von 10³ bis 10⁶ mPas bei 25 °C.

Bevorzugt handelt es sich bei Rest R³ um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus oxyethylen- und/oder Oxypropyleneinheiten aufgebaut sind, besonders bevorzugt um Alkylreste mit 1 bis 12 Kohlenstoffatomen, insbesondere um den Methylrest.

Beispiele für Rest R³ sind die für Rest R angegebenen Beispiele.

Besonders bevorzugt handelt es sich bei erfindungsgemäß eingesetzten Organosiliciumverbindungen (A) um im Wesentlichen lineare, OH-terminierte Organopolysiloxane, insbesondere um α,ω-Dihydroxydiorganopolysiloxane.

Beispiele für Organosiliciumverbindungen (A) sind (HO)Me₂SiO[SiMe₂O]₃₀₋₂₀₀₀SiMe₂(OH) mit Me gleich Methylrest.

Die erfindungsgemäß eingesetzten Organosiliciumverbindungen (A) haben eine Viskosität von 10³ bis 10⁶ mPas, besonders bevorzugt von 10³ bis 350 000 mPas, jeweils bei 25°C.

Bei den Organosiliciumverbindungen (A) handelt es sich um handelsübliche Produkte bzw. können nach in der Siliciumchemie gängigen Methoden hergestellt werden.

Die erfindungsgemäßen Massen enthalten Komponente (B) in Mengen von vorzugsweise 0,5 bis 10 Gewichtsteilen, besonders bevorzugt 1 bis 5 Gewichtsteilen, insbesondere 1 bis 2,5 Gewichtsteilen, jeweils bezogen auf 100 Gewichtsteile der erfindungsgemäßen Masse.

Bei den in den erfindungsgemäßen Massen gegebenenfalls eingesetzten weiteren vernetzern (C) kann es sich um beliebige, bisher bekannte Vernetzer mit mindestens drei kondensationsfähigen Resten handeln, wie beispielsweise Silane mit mindestens drei Organyloxygruppen, die von Komponente (B) verschieden sind.

Besonders bevorzugt handelt es sich bei den in den erfindungsgemäßen Massen gegebenenfalls eingesetzten weiteren Vernetzern (C) um Silanvernetzer, wie Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Cyanopropyltrimethoxysilan, 3-Cyanopropyltriethoxysilan, 3-(Glycidoxy)propyl triethoxysilan, 1,2-Bis(trimethoxysilyl)ethan, 1,2-Bis(triethoxysilyl)ethan, Cyclohexylaminomethyltriethoxysilan, Methyltriacetoxysilan, Ethyltriacetoxysilan, N-(Trimethoxysilylmethyl)O-methylcarbamat, N,N-Dibutylaminomethyltriethoxysilan, Methacrylsäure(triethoxysilylmethyl)ester, Methyltris(methylethylketoximo)silan und Vinyltris(methylethylketoximo)silan sowie deren Teilhydrolysate.

Die in den erfindungsgemäßen Massen gegebenenfalls eingesetzten weiteren Vernetzer (C) sind handelsübliche Produkte bzw. können nach in der Siliciumchemie bekannten Verfahren hergestellt werden.

Falls die erfindungsgemäßen Massen weitere Vernetzer (C) enthalten, handelt es sich um Mengen von vorzugsweise 0,1 bis 10 Gewichtsteilen, besonders bevorzugt 0,2 bis 5 Gewichtsteilen, ganz besonders bevorzugt 0,5 bis 3 Gewichtsteilen, jeweils bezogen auf 100 Gewichtsteile der erfindungsgemäßen Masse. Bevorzugt enthalten die erfindungsgemäßen Massen zusätzlichen Vernetzer (C).

Beispiele für Katalysatoren (D) sind die bisher schon bekannten Titanverbindungen, wie Tetraisopropoxytitanat, sowie Zirkonium- und Hafniumverbindungen, Zinkverbindungen wie Zink(2-ethylhexoat) und organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen wie Tetraethoxysilan, wobei Di-n-octylzinnoxid in Tetraethylsilikat-Hydrolysat, Di-n-octylzinnoxid in einem Gemisch aus 50 Gew.-% Methyltriethoxysilan-Hydrolysat und 50 Gew.-% 3-Aminopropyltriethoxysilan und Di-n-octylzinnoxid in Tetraisopropylsilikat bevorzugt sind, und wobei Umsetzungsprodukte von Phosphorsäureestern und Phosphonsäuren mit Di-n-octylzinnoxid in Tetraethylsilikat-Hydrolysat, mit Di-n-octylzinnoxid gelöst in einem Gemisch aus 50 Gew.-% Methyltriethoxysilan-Hydrolysat und 50 Gew.-% 3-Aminopropyltriethoxysilan und mit Di-n-octylzinnoxid in Tetraisopropylsilikat besonders bevorzugt sind.

Falls die erfindungsgemäßen Massen Katalysator (D) enthalten, handelt es sich um Mengen von vorzugsweise 0,0001 bis 2 Gewichtsteilen, bevorzugt 0,001 bis 1 Gewichtsteilen, jeweils bezogen auf 100 Gewichtsteile der erfindungsgemäßen Masse.

Bei den erfindungsgemäß gegebenenfalls eingesetzten, basischen Stickstoff aufweisenden Verbindungen (E) handelt es sich vorzugsweise um solche, ausgewählt aus der Gruppe bestehend aus Verbindungen der Formel

NR⁶₃ (III),

wobei R⁶ gleich oder verschieden sein kann und Wasserstoffatom oder Kohlenwasserstoffreste, die gegebenenfalls mit Hydroxygruppen, Halogenatomen, Aminogruppen, Ethergruppen, Estergruppen, Epoxygruppen, Mercaptogruppen, Cyanogruppen oder Polyglykolresten substituiert sind, wobei letztere aus Oxyethylen- und/oder Oxypropyleneinheiten aufgebaut sind, bedeutet, mit der Maßgabe, dass in Formel (III) höchstens zwei R⁶ die Bedeutung von Wasserstoffatom haben, wobei, falls mehrere R⁶ vorhanden sind, diese auch miteinander zu cyclischen Strukturen verknüpft sein können,
sowie Organosiliciumverbindungen mit mindestens einem basischen Stickstoff aufweisenden organischen Rest, die unterschiedlich sind zu Komponente (B), aus Einheiten der Formel

R⁷ₖY₁Si(OR⁸)ₘO_{(4-k-1-m)/2} (IV),

worin
R⁷ gleich oder verschieden sein kann und einen einwertigen, SiC-gebundenen, von basischem Stickstoff freien organischen Rest bedeutet,
R⁸ gleich oder verschieden sein kann und eine für Rest R² angegebene Bedeutung hat,
Y gleich oder verschieden sein kann und einen einwertigen, SiC-gebundenen Rest mit basischem Stickstoff bedeutet,
k 0, 1, 2, oder 3 ist,
1 0, 1, 2, 3 oder 4 ist und
m 0, 1, 2 oder 3 ist,
mit der Maßgabe, dass die Summe aus k+l+m kleiner oder gleich 4 ist und pro Molekül mindestens ein Rest Y anwesend ist.

Beispiele für Rest R⁶ und R⁷ sind jeweils unabhängig voneinander die für R angegebenen Beispiele für gegebenenfalls substituierte Kohlenwasserstoffreste.

Bei den gegebenenfalls substituierten Kohlenwasserstoffresten R⁶ handelt es sich vorzugsweise um solche mit 1 bis 18 Kohlenstoffatomen.

Bei Rest R⁷ handelt es sich vorzugsweise um Kohlenwasserstoffreste mit 1 bis 18 Kohlenstoffatomen, wobei der Methyl-, Ethyl- und n-Propylrest besonders bevorzugt sind, insbesondere der Methylrest.

Beispiele für Rest R⁸ sind die für Rest R² angegebenen Beispiele.

Vorzugsweise handelt es sich bei Rest R⁸ um den Methyl- und Ethylrest.

Beispiele für Reste Y sind Reste der Formeln H₂NCH₂-, H₂N(CH₂)₂-, H₂N (CH₂)₃-, H₂N(CH₂)₂NH(CH₂)₂-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)3-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(CH₂)₃- und (C₂H₅)₂N(CH₂)₂-.

Bevorzugt handelt es sich bei Y um H₂N(CH₂)₃-, H₂N(CH₂)₂NH(CH₂)₃-, H₃CNH(CH₂)₃-, C₂H₅NH(CH₂)₃- und cyclo-C₆H₁₁NH(CH₂)₃-Rest, wobei H₂N(CH₂)₂NH(CH₂)₃- und cyclo-C₆H₁₁NH(CH₂)₃-Rest besonders bevorzugt sind.

Handelt es sich bei den Organosiliciumverbindungen aus Einheiten der Formel (IV) um Silane, so ist k bevorzugt 0, 1 oder 2, besonders bevorzugt 0 oder 1, 1 bevorzugt 1 oder 2, besonders bevorzugt 1, und m bevorzugt 1, 2 oder 3, besonders bevorzugt 2 oder 3, mit der Maßgabe, dass die Summe aus k+l+m gleich 4 ist.

Beispiele für die erfindungsgemäß gegebenenfalls eingesetzten Silane der Formel (IV) sind H₂N(CH₂)₃-Si(OCH₃)_{3,} H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₂NH(CH₂)₃-Si(OC₂H₅) ₃, cyclo-C₆H₁₁NH(CH₂)₃-Si(OCH₃)₃, cyclo-C₆H₁₁NH(CH₂)3-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, HN((CH₂)₃-Si(OCH₃)₃)₂ und HN((CH₂)₃-Si(OC₂H₅)₃)₂ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, cyclo-C₆H₁₁NH(CH₂)₃-Si(OC₂H₅)₃, cyclo-C₆H₁₁NH(CH₂)₃-Si(OCH₃)₂CH₃ sowie cyclo-C₆H₁₁NH (CH₂) ₃-Si(OC₂H₅)₂CH₃, bevorzugt und H₂N(CH₂)₂NH(CH₂)₃-Si(OC₂H₅)₃, H₂N(CH₂)₂NH(CH₂)₃-Si(OC₂H₅)₂CH₃, cyclo-C₆H₁₁NH(CH₂)₃-Si(OC₂H₅)₃ und cyclo-C₆H₁₁NH(CH₂)₃-Si(OC₂H₅)₂CH₃ sowie jeweils deren Teilhydrolysate besonders bevorzugt sind.

Falls es sich bei der Organosiliciumverbindung aus Einheiten der Formel (IV) um Organopolysiloxane handelt, ist der durchschnittliche Wert von k vorzugsweise zwischen 0,5 und 2,5, besonders bevorzugt zwischen 1,4 und 2,0, der durchschnittliche Wert von 1 vorzugsweise zwischen 0,01 und 1,0, besonders bevorzugt zwischen 0,01 und 0,6, und der durchschnittliche Wert von m vorzugsweise zwischen 0 und 2,0, besonders bevorzugt zwischen 0 und 0,2, mit der Maßgabe, dass die Summe aus k, 1 und m kleiner oder gleich 3 ist.

Die erfindungsgemäß einsetzbaren Organopolysiloxane aus Einheiten der Formel (IV) haben eine Viskosität bei 25°C von vorzugsweise 5 bis 10⁵ mPas, besonders bevorzugt von 10 bis 10⁴ mPas.

Beispiele für die erfindungsgemäß einsetzbaren Organopolysiloxane aus Einheiten der Formel (IV) sind H₂N(CH₂)₃-Si(OCH₃)₂-O-Si(CH₃)(OCH₃)₂, H₂N(CH₂)₃-Si(OC₂H₅)₂-O-Si(CH₃)(OCH₃)₂, H₂N(CH₂)₃-Si(OC₂H₅)₂-O-Si(CH₃)(OC₂H₅)₂, H₂N(CH₂)₃-Si(OCH₃)(CH₃)-O-Si(CH₃)(OCH₃)₂, H₂N(CH₂)₃-Si(OCH₃)(CH₃)-O-Si(OCH₃)₃, H₂N(CH₂)₃-Si(OC₂H₅)(CH₃)-O-Si(OCH₃)₃, H₂N(CH₂)₂NH(CH₂)₃-Si(OCH₃)₂-O-Si(CH₃)(OCH₃)₂, H₂N(CH₂)₂NH(CH₂)₃-Si(OC₂H₅)2-O-Si(CH₃)(OCH₃)₂, H₂N(CH₂)₂NH(CH₂)₃-Si(OC₂H₅)₂-O-Si(CH₃)(OC₂H₅)₂, H₂N(CH₂)₂NH(CH₂)₃-Si(OCH₃)(CH₃)-O-Si(CH₃)(OCH₃)₂, H₂N(CH₂)₂NH(CH₂)₃-Si(OCH₃)(CH₃)-O-Si(OCH₃)₃, H₂N(CH₂)₂NH(CH₂)₃-Si(OC₂H₅)(CH₃)-O-Si(OCH₃)₃, cyclo-C₆H₁₁NH(CH₂)₃-Si(OCH₃)2-O-Si(CH₃)(OCH₃)₂, cyclo-C₆H₁₁NH(CH₂)₃-Si(OC₂H₅)₂-O-Si(CH₃)(OCH₃)₂, cyclo-C₆H₁₁NH(CH₂)₃-Si(OC₂H₅)₂-O-Si(CH₃)(OC₂H₅)₂, cyclo-C₆H₁₁NH(CH₂)₃-Si(OCH₃)(CH₃)-O-Si(CH₃)(OCH₃)₂, cyclo-C₆H₁₁NH(CH₂)₃-Si(OCH₃)(CH₃)-O-Si(OCH₃)₃ und cyclo-C₆H₁₁NH(CH₂)₃-Si(OC₂H₅)(CH₃)-O-Si(OCH₃)₃, H₂N(CH₂)₃-Si(OCH₃)₂-(O-Si(CH₃)₂)₁₋₁₀₀-O-Si(OCH₃)₂-(CH₂)₃NH₂, H₂N(CH₂)₂NH(CH₂)₃-Si(OCH₃)₂-(O-Si(CH₃)₂)₁₋₁₀₀-O-Si(OCH₃)₂-(CH₂)₃ NH (CH₂)₂NH₂ und cyclo-C₆H₁₁NH(CH₂)₃-Si(OCH₃)₂-(O-Si(CH₃)₂)₁₋₁₀₀-O-Si(OCH₃)₂-(CH₂)₃NHcyclo-C₆H₁₁ sowie deren Teilhydrolysate, wobei ein Teilhydrolysat aus H₂N(CH₂)₃-Si(OC₂H₅)₂-O-Si(CH₃)(OC₂H₅)₂ besonders bevorzugt ist.

Organosiliciumverbindungen aus Einheiten der Formel (IV) sind handelsübliche Produkte bzw. können nach in der Siliciumchemie gängigen Verfahren hergestellt werden.

Beispiele für Amine der Formel (III) sind Cyclohexylamin, Triethylamin, Trioctylamin, Butylamin, Dodecylamin, Diethyl-n-propylamin, Cyclohexylmethylamin, 2-Aminoethanol, 2-Amino-n-propa-nol, 2-Amino-2-methyl-1-propanol, 2-Dimethylamino-2-methyl-1-propanol, N,N-Diethylethanolamin, Ethylendiamin, Cocosfettamin, Cocosfettmethylamin, N,N-Dimethylethanolamin und Anilin.

Falls Komponente (E) eingesetzt wird, handelt es sich bevorzugt um Organosiliciumverbindungen aus Einheiten der Formel (IV).

Falls die erfindungsgemäßen Massen Komponente (E) enthalten, handelt es sich um Mengen von vorzugsweise 0,001 bis 2 Gewichtsteilen, bevorzugt 0,01 bis 1 Gewichtsteilen, jeweils be-zogen auf 100 Gewichtsteile der erfindungsgemäßen Masse. Bevorzugt enthalten die erfindungsgemäßen Massen Komponente (E). Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisenoder Zinkoxide bzw. deren Mischoxide, Bariumsulfat, Calciumcarbonat, Gips, Siliciumnitrid, Siliciumcarbid, Bornitrid, Glasund Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefälltes Calciumcarbonat, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen. Falls Füllstoffe (F) eingesetzt werden, handelt es sich bevorzugt um hydrophile pyrogene Kieselsäure, gefälltes Calciumcarbonat und Marmormehl.

Falls die erfindungsgemäßen Massen Komponente (F) enthalten, handelt es sich um Mengen von vorzugsweise 1 bis 80 Gewichtsteilen, bevorzugt 5 bis 65 Gewichtsteilen, jeweils bezogen auf 100 Gewichtsteile erfindungsgemäße Masse. Bevorzugt enthalten die erfindungsgemäßen Massen Komponente (F).

Beispiele für die in den erfindungsgemäßen Massen gegebenenfalls eingesetzten Haftvermittler (G) sind Silane und Organopolysiloxane mit funktionellen Gruppen, wie beispielsweise solche mit Glycidoxypropyl-, Aminopropyl-, Aminoethylaminpropyl-, Ureidopropyl- oder Methacryloxypropylresten. Falls jedoch bereits eine andere Komponente, wie etwa Organosiliciumverbindung (A), (B), (C) oder (E), die genannten funktionellen Gruppen aufweist, kann auf einen Zusatz von Haftvermittler (G) verzichtet werden.

Falls die erfindungsgemäßen Massen Komponente (G) enthalten, handelt es sich um Mengen von vorzugsweise 0,01 bis 10 Gewichtsteilen, bevorzugt 0,1 bis 2,5 Gewichtsteilen, jeweils bezogen auf 100 Gewichtsteile der erfindungsgemäßen Masse. Bevorzugt enthalten die erfindungsgemäßen Massen Komponente (G).

Beispiele für Weichmacher (H) sind bei Raumtemperatur flüssige, durch Trimethylsiloxygruppen endblockierte Dimethylpolysiloxane, insbesondere mit Viskositäten bei 25°C im Bereich zwischen 5 und 1000 mPas, sowie hochsiedende Kohlenwasserstoffe, wie zum Beispiel Paraffinöle oder Mineralöle bestehend aus naphthenischen und paraffinischen Einheiten.

Falls die erfindungsgemäßen Massen Komponente (H) enthalten, handelt es sich um Mengen von vorzugsweise 1 bis 50 Gewichtsteilen, bevorzugt 10 bis 35 Gewichtsteilen, jeweils bezogen auf 100 Gewichtsteile der erfindungsgemäßen Masse. Bevorzugt enthalten die erfindungsgemäßen Massen Komponente (H).

Beispiele für Additive (I) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Polyether, und organischen Lösungsmittel, wie Alkylaromaten, Biocide wie Fungicide, Bactericide, Acarizide und Mittel zur Regulierung des Moduls wie Polydimethylsiloxane mit einer OH-Endgruppe.

Falls die erfindungsgemäßen Massen Komponente (I) enthalten, handelt es sich um Mengen von vorzugsweise 0,0001 bis 10 Gewichtsteilen, bevorzugt 0,001 bis 10 Gewichtsteilen, jeweils bezogen auf 100 Gewichtsteile der erfindungsgemäßen Masse.

Besonders bevorzugt handelt es sich bei den erfindungsgemäßen Massen um solche, herstellbar unter Verwendung von
(A) Organosiliciumverbindungen enthaltend Einheiten der Formel (II) mit einer Viskosität von 10³ bis 10⁶ mPas bei 25 °C,
(B) Verbindungen der Formel (I),
   gegebenenfalls
(C) Vernetzer,
   gegebenenfalls
(D) Katalysator,
   gegebenenfalls
(E) basischen Stickstoff aufweisende Verbindung,
   gegebenenfalls
(F) Füllstoffen,
   gegebenenfalls
(G) Haftvermittler,
   gegebenenfalls
(H) Weichmacher und
   gegebenenfalls
(I) Additiven.

Des weiteren besonders bevorzugt handelt es sich bei den erfindungsgemäßen Massen um solche, herstellbar unter Verwendung von
(A) Organosiliciumverbindungen enthaltend Einheiten der Formel (II) mit einer Viskosität von 10³ bis 10⁶ mPas bei 25 °C,
(B) Verbindungen der Formel (I),
   gegebenenfalls
(C) Vernetzer,
   gegebenenfalls
(D) Katalysator,
(E) basischen Stickstoff aufweisende Verbindung,
(F) hydrophile pyrogene Kieselsäure,
   gegebenenfalls
(G) Haftvermittler,
(H) Weichmacher und
   gegebenenfalls
(I) Additiven.

Bei diesen letztgenannten Massen wird Bestandteil (E) in einer Menge von bevorzugt 0,2 bis 50 µmol, besonders bevorzugt 1 bis 20 µmol, aminischen Stickstoff des Bestandteils (E) pro m² BET-Oberfläche des Bestandteils (F) eingesetzt.

Insbesondere werden zur Herstellung der erfindungsgemäßen Massen keine über die Komponenten (A) bis (I) hinausgehende weiteren Bestandteile eingesetzt.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, oder unter vermindertem Druck von etwa 20 hPa bis 800 hPa erfolgen. Falls erwünscht, kann dieses Vermischen aber auch bei höheren Temperaturen erfolgen, z.B. bei Temperaturen im Bereich von 35 bis 135°C. Falls gewünscht kann geheizt oder gekühlt werden.

Das erfindungsgemäße Vermischen der einzelnen Komponenten findet bevorzugt unter weitestgehendem Ausschluss von Wasser aus der umgebenden Atmosphäre statt, was z.B durch Überschleierung mit trockener Luft realisiert werden kann.

Es ist unerheblich, in welcher Reihenfolge Polymer, Vernetzer und Weichmacher gemischt werden. Aus Gründen der bequemen Verarbeitung werden bevorzugt Polymer (A) und gegebenenfalls Weichmacher (H) zunächst vorgelegt und danach Komponente (B) und gegebenenfalls Vernetzer (C) zugegeben.

Falls Füllstoffe (F) zugegeben werden, werden bevorzugt Komponente (A), Komponente (B), gegebenenfalls Komponente (C) und gegebenenfalls Amin (E) miteinander innig gemischt, bevor Füllstoff (F), bevorzugt hydrophile Kieselsäure, zugegeben wird. Bevorzugt wird, falls Komponente (E) eingesetzt wird, das Verhältnis von (E) zu (F) so gewählt, dass pro Quadratmeter. BET-Oberfläche des Füllstoffs (F) mindestens 0,2 µmol basischen Stickstoff aufweisende Verbindungen (E) eingesetzt werden.

Falls Füllstoffe (F) und Weichmacher (H) zugesetzt werden, wird bevorzugt das Gemisch Polymer (A), Weichmacher (H) und Komponente (B) sowie gegebenenfalls Vernetzer (C) durch Rühren innig gemischt. Dabei findet die oben bereits erwähnte Reaktion zwischen Organosiliciumverbindung (A) und Verbindungen (B) und gegebenenfalls Vernetzer (C) statt.

Falls als Füllstoffe (F) hydrophile pyrogene Kieselsäure zugegeben wird, werden bevorzugt Komponente (A), Weichmacher (H), Komponente (B) und gegebenenfalls Komponenten (C) vor der Zugabe von Füllstoff (F) solange miteinander innig gemischt, bis mindestens 90% der OH-Gruppen der Organosiliciumverbindung (A) mit den Bestandteilen (B) und (C) reagiert haben, wobei vor der Zugabe der pyrogenen Kieselsäure zu beliebiger Zeit Komponente (E) zugegeben wird. Bevorzugt wird das Verhältnis von (E) zu (F) so gewählt, dass pro Quadratmeter BET-Oberfläche des Füllstoffs mindestens 0,2 µmol basischen Stickstoff aufweisende Verbindungen (E) eingesetzt werden.

Mitunter wird, falls Weichmacher (H) eingesetzt wird, dieser ganz oder wenigstens Teile der Gesamtmenge des Weichmachers auch erst nach den Füllstoffen zugegeben. Diese Verfahrensweise wird als Anreiben bezeichnet und dient dazu schwer zu dispergierende Füllstoffe durch die bei dieser Verfahrensweise deutlich höheren Viskosität der Mischung besser homogen zu verteilen. Am Ende der Anreibphase wird dann die Mischung durch Zugabe des restlichen Weichmachers vervollständigt. Diese Arbeitsweise ist jedoch nicht bevorzugt.

Des Weiteren ist es in der Regel unerheblich, an welcher Stelle Katalysator (D) zugegeben wird. Sinnvollerweise gibt man den Katalysator jedoch erst zum Schluss zu, da dann die Mischung aktiviert wird. Ein zu langes Mischen bereits sehr reaktiver Dichtmassen wird der Fachmann in der Praxis vermeiden wollen, da ein vollständiger Ausschluss von Feuchtigkeit beim Herstellen der Mischung schwierig oder zumindest unökonomisch ist. Mitunter ist es auch erforderlich, dass der Katalysator nicht mit einer Polymer-Vernetzer-Mischung in Kontakt kommt, die noch größere Mengen an unumgesetzten OH-Gruppen enthält, da dann mitunter eine vorzeitige Vernetzung der Mischung stattfinden kann. Auch aus diesem Grund wird der Fachmann es vermeiden, den Katalysator zu zeitig zuzugeben. Ausnahmsweise wird der Fachmann den Vernetzungskatalysator nur dann am Anfang der Mischungsherstellung mit zusetzen, wenn dieser gleichzeitig Katalysator für die Umsetzung der OH-Polymere mit dem Vernetzer ist.

Das Vermischen der Bestandteile kann an beliebiger Stelle für beliebige Zeit unterbrochen werden, insbesondere nach Vermischen der Organosiliciumverbindung (A) mit Verbindung (B) und gegebenenfalls Vernetzer (C). Bevorzugt ist jedoch die Mischungsherstellung in enger zeitlicher Reihenfolge durchzuführen, insbesondere in einem kontinuierlichen Verfahren.

Nach Vermischen aller gewünschten Bestandteile wird die Mischung bevorzugt entgast und in feuchtigkeitsdichte Gebinde gefüllt.

Die erfindungsgemäße Herstellung der erfindungsgemäßen vernetzbaren Massen kann sowohl diskontinuierlich wie auch kontinuierlich durchgeführt werden.

Bei der kontinuierlichen Verfahrensweise wird bevorzugt zunächst Organosiliciumverbindung (A) mit Verbindung (B) sowie gegebenenfalls Weichmacher (H) kontinuierlich, bevorzugt mit einem dynamischen Mischer, vermischt, wobei die Reaktionszeit von Organosiliciumverbindung (A) mit Verbindungen (B) 1 bis 60 Minuten beträgt, bevor gegebenenfalls weitere Mischnungsbestandteile eingemischt werden. Beispielsweise können durch gezielte Gestaltung von Leitungslängen und Leitungsquerschnitt in der kontinuierlich arbeitenden Anlage die Reaktionszeiten eingestellt werden. Bevorzugt ist bei dem erfindungsgemäßen kontinuierlichen Verfahren die Reaktionszeit so bemessen, dass mindestens 90 % der OH-Gruppen der Organosiliciumverbindung (A) mit Verbindungen (B) reagiert haben. Anschließend können kontinuierlich, beispielsweise mit einem statischen Mischer, Vernetzer (C), basischen Stickstoff aufweisende Verbindung (E), Haftvermittler (G) und Weichmacher (H) eingemischt werden.

Falls erwünscht, erfolgt im Anschluss daran, bevorzugt ohne Zwischenlagerung, das kontinuierliche Einmischen von Füllstoffen (F), wie hochdisperse Kieselsäure, wobei z.B. Mischer mit Rotor/Stator-System verwendet werden können.

Vor der möglichen Zugabe des Katalysators (D) und von Additiven (I) kann die erfindungsgemäße Masse kontinuierlich entgast werden, beispielsweise mit Hilfe eines Zweischneckenextruders.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels des normalen Wassergehalts der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasserund Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie leicht herzustellen sind und über einen langen Zeitraum eine hohe Lagerstabilität aufweisen.

Die erfindungsgemäßen Massen haben den Vorteil, dass keine toxikologisch bedenklichen Spaltprodukte entstehen.

Des Weiteren haben die erfindungsgemäßen Massen den Vorteil, dass keine oder nur sehr geringe Mengen toxikologisch bedenklichen Katalysatoren eingestezt werden müssen.

Ferner haben die erfindungsgemäßen Massen den Vorteil, dass eine sehr gleichmäßige Durchhärtung auch in dicker Schicht erreicht werden kann, und dass sich bei der Anwendung auf beispielsweise durch Sonnenstrahlung erhitzten Substratoberflächen keine Blasen in der Dichtmasse und an der Grenzfläche von Dichtmasse und Substratoberfläche bilden.

Die erfindungsgemäßen Massen haben den Vorteil, dass sich bei der Verwendung von wässrigen Glättmitteln keine gut sichtbaren Flecken auf der Oberfläche der Dichtmasse bilden.

Des Weiteren haben die erfindungsgemäßen Massen den Vorteil, dass sich die Hautbildungszeit in sehr weiten Grenzen durch Variieren der Katalysatorkonzentration einstellen lässt.

Des Weiteren haben die erfindungsgemäßen Massen den Vorteil, dass sie sich vollständig kontinuierlich herstellen lassen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Die Shore-A-Härte wird nach DIN (Deutsche Industrie Norm) 53505-87 bestimmt.

Die Reißfestigkeit wird nach DIN 53504-85 S2 bestimmt.

Die Reißdehnung wird nach DIN 53504-85 S2 bestimmt.

Der Modul ist der Spannungswert bei 100 % Dehnung.

### Beispiel 1

350 g eines α,ω-Dihydroxypolydimethylsiloxans mit einer Viskosität von 80 000 mPas, 150 g eines α,ω-Trimethylsiloxypolydimethylsiloxans mit einer Viskosität von 1 000 mPas, 13,6 g 4(Triethoxysilylmethyl)tetrahydro-1,4-oxazin, 20 g Vinyltriethoxysilan, 12 g Tetraethoxysilan, 4,4 g einer Mischung aus 1 Gew.-Teil Methyltrimethoxysilan-Hydrolysat-Oligomeren mit durchschnittlich 10 Si-Atomen pro Molekül und 1 Gew.-Teil 3-Aminopropyltriethoxysilan wurden in einem Planetendissolver innig miteinander für 15 Minuten gemischt. Danach wurden 45 g hydrophile pyrogene Kieselsäure mit einer BET-Oberfläche von 150 m²/g zugegeben (käuflich erhältlich unter der Bezeichnung HDK® V15 bei der Wacker Chemie AG, D-München) und weitere 15 Minuten gemischt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt. Es wurde nach ISO 7390 eine standfeste Masse erhalten, das heißt, die Masse lief nicht aus einem senkrecht aufgehängtem U-förmigen Aluminiumprofil.

Von dieser Mischung wurden 2 mm dicke Platten auf eine Polyethylenfolie ausgestrichen, die nach einem Tag Aushärtung von der Folie abgelöst und so aufgehängt wurden, dass für weitere 6 Tage von allen Seiten Luft zutreten konnte, so dass die Proben über insgesamt 7 Tage ausgehärtet wurden. Die relative Luftfeuchtigkeit wurde dabei auf 50% eingestellt, wobei die Temperatur auf 23°C geregelt wurde. Von diesen Platten wurden anschließend Prüfkörper der Form S2 gemäß DIN 53504-85 ausgestanzt und die mechanischen Kennwerte gemessen. Zur Bestimmung der Härte wurden 6 mm dicke Probekörper hergestellt, die ebenfalls über 7 Tage bei einer relativen Luftfeuchtigkeit von 53% und einer Temperatur von 23°C durch Reaktion mit der umgebenden Luftfeuchtigkeit ausgehärtet wurden.

Darüber hinaus wurden die Hautbildungszeit und die Zeit bis zur Klebfreiheit der Oberfläche ermittelt, jeweils auch wiederum bei 50% relativer Luftfeuchtigkeit und 23°C. Die Hautbildungszeit wird so bestimmt, dass die Oberfläche einer frisch ausgestrichenen Masse in Abständen von 3 Minuten mit der Spitze eines Bleistifts leicht berührt wird. Die Hautbildungszeit ist dann erreicht, wenn an der Spitze des Bleistifts keine Masse mehr hängenbleibt. Die Klebfreiheit wird durch Befühlen mit den Fingern in Abständen von 30 Minuten festgestellt. Wenn man keine Oberflächenklebrigkeit mehr bemerkt, ist die Klebfreiheit erreicht.

Die Ergebnisse finden sich in Tabelle 1.

### Beispiel 2

350 g eines α,ω-Dihydroxypolydimethylsiloxans mit einer Viskosität von 80 000 mPas, 150 g eines α,ω-Trimethylsiloxypolydimethylsiloxans mit einer Viskosität von 1 000 mPas, 10 g 4-(Triethoxysilylmethyl)tetrahydro-1,4-oxazin, 15 g Vinyltriethoxysilan, 9 g Tetraethoxysilan, 10 g einer Mischung aus 1 Gew.-Teil Methyltrimethoxysilan-Hydrolysat-Oligomeren mit durchschnittlich 10 Si-Atomen pro Molekül und 1 Gew.-Teil 3-Aminopropyltriethoxysilan wurden in einem Planetendissolver innig miteinander für 15 Minuten gemischt. Danach wurden 48 g hydrophile pyrogene Kieselsäure mit einer BET-Oberfläche von 150 m²/g zugegeben (käuflich erhältlich unter der Bezeichnung HDK® V15 bei der Nacker Chemie AG, D-München) und weitere 15 Minuten gemischt. Anschließend wurde die Mischung durch Zugabe von 0,4 g eines Unsetzungsproduktes von Dioctylzinndiacetat mit Tetraethoxysilan im Molverhältnis 1:2, wobei der entstandene Essigsäureethylester abdestilliert wurde, und 0,3 g einer 50 Gew.-%igen Lösung von Octylphosphonsäure in Methyltrimethoxysilan vervollständigt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt. Es wurde eine standfeste Masse erhalten.

Die Kennwerte dieser Mischung wurden analog Beispiel 1 ermittelt und sind in Tabelle 1 zusammengestellt.

### Beispiel 3

350 g eines α,ω-Dihydroxypolydimethylsiloxans mit einer Viskosität von 80 000 mPas, 150 g eines α,ω-Trimethylsiloxypolydimethylsiloxans mit einer Viskosität von 1 000mPas, 13,6 g 4-(Triethoxysilylmethyl)tetrahydro-1,4-oxazin, 20 g Vinyltriethoxysilan, 12 g Tetraethoxysilan, 4,4 g einer Mischung aus 1 Gew.-Teil Methyltrimethoxysilan-Hydrolysat-Oligomeren mit durchschnittlich 10 Si-Atomen pro Molekül und 1 Gew.-Teil 3-Aminopropyltriethoxysilan wurden in einem Planetendissolver innig miteinander für 15 Minuten gemischt. Danach wurden 45 g hydrophile pyrogene Kieselsäure mit einer BET-Oberfläche von 150 m²/g zugegeben (käuflich erhältlich unter der Bezeichnung HDK® V15 bei der Wacker Chemie AG, D-München) und weitere 15 Minuten gemischt. Anschließend wurde die Mischung durch Zugabe von 6 g Zink-2-ethylhexoat (käuflich erhältlich unter der Bezeichnung Katalysator A42 bei der Wacker Chemie AG, D-München) vervollständigt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt. Es wurde eine standfeste Masse erhalten.

Die Kennwerte dieser Mischung wurden analog Beispiel 1 ermittelt und sind in Tabelle 1 zusammengestellt.

### Beispiel 4

350 g eines α,ω-Dihydroxypolydimethylsiloxans mit einer Viskosität von 80 000 mPas, 150 g eines α,ω-Trimethylsiloxypolydime-thylsiloxans mit einer Viskosität von 1 000 mPas, 13,6 g 4-(Triethoxysilylmethyl)tetrahydro-1,4-oxazin, 20 g Vinyltriethoxysilan, 12 g Tetraethoxysilan, 8,6 g einer Mischung aus 1 Gew.-Teil Methyltrimethoxysilan-Hydrolysat-Oligomeren mit durchschnittlich 10 Si-Atomen pro Molekül und 1 Gew.-Teil 3-Aminopropyltriethoxysilan wurden in einem Planetendissolver innig miteinander für 15 Minuten gemischt. Danach wurden 45 g hydrophile pyrogene Kieselsäure mit einer BET-Oberfläche von 150 m²/g zugegeben (käuflich erhältlich unter der Bezeichnung HDK® V15 bei der Wacker Chemie AG, D-München), 112 g gefälltes CaCO₃ mit einem mittleren Teilchendurchmesser (D50%) von ca. 2,0 µm (käuflich erhältlich unter der Bezeichnung "Precarb 200" bei der Firma Schäfer Kalk KG, D-Diez), 448 g Marmormehl mit einem mittleren Teilchendurchmesser (D50%) von ca. 5,0 µm (käuflich erhältlich unter der Bezeichnung "OMYA 5GU" bei der Firma OMYA, D-Köln) zugegeben und weitere 20 Minuten gemischt. Anschließend wurde die Mischung durch Zugabe von 0,37g eines Umsetzungsproduktes von Dibutylzinndiacetat mit Tetraethoxysilan im Molverhältnis 1:2, wobei der entstandene Essigsäureethylester abdestilliert wurde, und 0,4 g einer 50 Gew.-%igen Lösung von Octylphosphonsäure in Methyltrimethoxysilan vervollständigt und weitere 5 Minuten gemischt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt. Es wurde eine standfeste Masse erhalten.

Die Kennwerte dieser Mischung wurden analog Beispiel 1 ermittelt und sind in Tabelle 1 zusammengestellt.

### Beispiel 5

350 g eines α,ω-Dihydroxypolydimethylsiloxans mit einer Viskosität von 80 000 mPas, 150 g eines α,ω-Trimethylsiloxypolydimethylsiloxans mit einer Viskosität von 1 000 mPas, 13,6 g 4-(Triethoxysilylmethyl)tetrahydro-1,4-oxazin, 20 g Vinyltriethoxysilan, 12 g Tetraethoxysilan, 8,6 g einer Mischung aus 1 Gew.-Teil Methyltrimethoxysilan-Hydrolysat-Oligomeren mit durchschnittlich 10 Si-Atomen pro Molekül und 1 Gew.-Teil 3-Aminopropyltriethoxysilan wurden in einem Planetendissolver innig miteinander für 15 Minuten gemischt. Danach wurden 45 g hydrophile pyrogene Kieselsäure mit einer BET-Oberfläche von 150 m²/g zugegeben (käuflich erhältlich unter der Bezeichnung HDK® V15 bei der Wacker Chemie AG, D-München), 560 g Marmormehl mit einem mittleren Teilchendurchmesser (D50%) von ca. 5,0 µm (käuflich erhältlich unter der Bezeichnung "OMYA 5GU" bei der Firma OMYA, D-Köln) zugegeben und weitere 20 Minuten gemischt. Anschließend wurde die Mischung durch Zugabe von 0,37g eines Umsetzungsproduktes von Dibutylzinndiacetat mit Tetraethoxysilan im Molverhältnis 1:2, wobei der entstandene Essigsäureethylester abdestilliert wurde, und 0,4 g einer 50 Gew.-%igen Lösung von Octylphosphonsäure in Methyltrimethoxysilan vervollständigt und weitere 5 Minuten gemischt. Zum Entgasen der Mischung wurde ein Unterdruck von ca. 200hPa angelegt und nochmals 5 Minuten gemischt. Danach wurde die fertige Mischung in handelsübliche Polyethylenkartuschen abgefüllt. Es wurde eine standfeste Masse erhalten.

Die Kennwerte dieser Mischung wurden analog Beispiel 1 ermittelt und sind in Tabelle 1 zusammengestellt.

### Beispiel 6

350 g eines α,ω-Dihydroxypolydimethylsiloxans mit einer Viskosität von 80 000 mPas, 150 g eines α,ω-Trimethylsiloxypolydimethylsiloxans mit einer Viskosität von 1 000 mPas, 13,6 g 4-(Triethoxysilylmethyl)tetrahydro-1,4-oxazin, 20 g Vinyltriethoxysilan, 12 g Tetraethoxysilan, 8,6 g einer Mischung aus 1 Gew.-Teil Methyltrimethoxysilan-Hydrolysat-Oligomeren mit durchschnittlich 10 Si-Atomen pro Molekül und 1 Gew.-Teil 3-Aminopropyltriethoxysilan wurden in einem Planetendissolver innig miteinander für 15 Minuten gemischt. Danach wurden 45 g hydrophile pyrogene Kieselsäure mit einer BET-Oberfläche von 150 m²/g zugegeben (käuflich erhältlich unter der Bezeichnung HDK® V15 bei der Wacker Chemie AG, D-München), 560 g Marmormehl mit einem mittleren Teilchendurchmesser (D50%) von ca. 5,0 µm (käuflich erhältlich unter der Bezeichnung "OMYA 5GU" bei der Firma OMYA, D-Köln) zugegeben und weitere 20 Minuten gemischt. Anschließend wurde die Mischung durch Zugabe von 11,6 g Zink-2-ethylhexoat (käuflich erhältlich unter der Bezeichnung "Kataly-sator A42" bei der Wacker Chemie AG, D-München) vervollständigt und weitere 5 Minuten gemischt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt. Es wurde eine standfeste Masse erhalten.

Die Kennwerte dieser Mischung wurden analog Beispiel 1 ermittelt und sind in Tabelle 1 zusammengestellt.

### Beispiel 7

450 g eines α,ω-Dihydroxypolydimethylsiloxans mit einer Viskosität von 80 000 mPas, 50 g eines α,ω-Trimethylsiloxypolydimethyl-siloxans mit einer Viskosität von 1 000 mPas, 12,4 g 4-(Trieth-oxysilylmethyl)tetrahydro-1,4-oxazin, 16,9 g Vinyltrimethoxysilan und 10,5 g Tetraethoxysilan wurden in einem Planetendissolver innig miteinander für 5 Minuten gemischt. Danach wurden 50 g hydrophile pyrogene Kieselsäure mit einer BET-Oberfläche von 150 m²/g zugegeben (käuflich erhältlich unter der Bezeichnung HDK® V15 bei der Wacker Chemie AG, D-München) und weitere 15 Minuten gemischt. Zum Entgasen der Mischung wurde eine Vakuum von ca. 200 hPa angelegt und nochmals 5 Minuten gemischt. Danach wurde die fertige Mischung in handelsübliche Polyethylenkartuschen abgefüllt. Es wurde eine leicht selbstnivellierende und daher nicht standfeste Masse erhalten.

Die Kennwerte dieser Mischung wurden analog Beispiel 1 ermittelt und sind in Tabelle 1 zusammengestellt.

### Beispiel 8

700 kg/h eines α,ω-Dihydroxypolydimethylsiloxans mit einer Viskosität von 80 000 mPas, 300 kg/h eines α,ω-Trimethylsiloxypolydimethylsiloxans mit einer Viskosität von 1 000 mPas und 27 kg/h 4-(Triethoxysilylmethyl)tetrahydro-1,4-oxazin wurden kontinuierlich mit Hilfe eines dynamischen Mischers vermischt. Die Mischung wurde in einer Rohrleitung zu einem statischen Mischer gefördert, wobei die durchschnittliche Verweilzeit des Mischgutes ca. 20 Minuten betrug.

In die erhaltene Mischung wurden durch den statischen Mischer 40 kg/h Vinyltriethoxysilan, 24 kg/h Tetraethoxysilan und 9 kg/h einer Mischung aus 1 Gew.-Teil Methyltrimethoxysilan-Hydrolysat-Oligomeren mit durchschnittlich 10 Si-Atomen pro Molekül und 1 Gew.-Teil 3-Aminopropyltriethoxysilan eingemischt. Unmittelbar danach wurden 90 kg/h hydrophile pyrogene Kieselsäure mit einer BET-Oberfläche von 150 m²/g (käuflich erhältlich unter der Bezeichnung HDK® V15 bei der Wacker Chemie AG, D-München) eingemischt. Verwendet wurde ein Mischer mit Rotor/Stator-Mischsystem, wie er in EP-B-101 46 395 beschrieben ist, die zum Offenbarungsgehalt der vorliegenden Erfindung zu zählen ist.

Anschließend wurde die Mischung mit Hilfe eines Zweischneckenextruders entgast und in handelsübliche feuchtigkeitsdichte Fässer mit Inliner abgefüllt. Es wurde eine standfeste Masse erhalten.

Die Kennwerte dieser Mischung wurden analog Beispiel 1 ermittelt und sind in Tabelle 1 zusammengestellt.

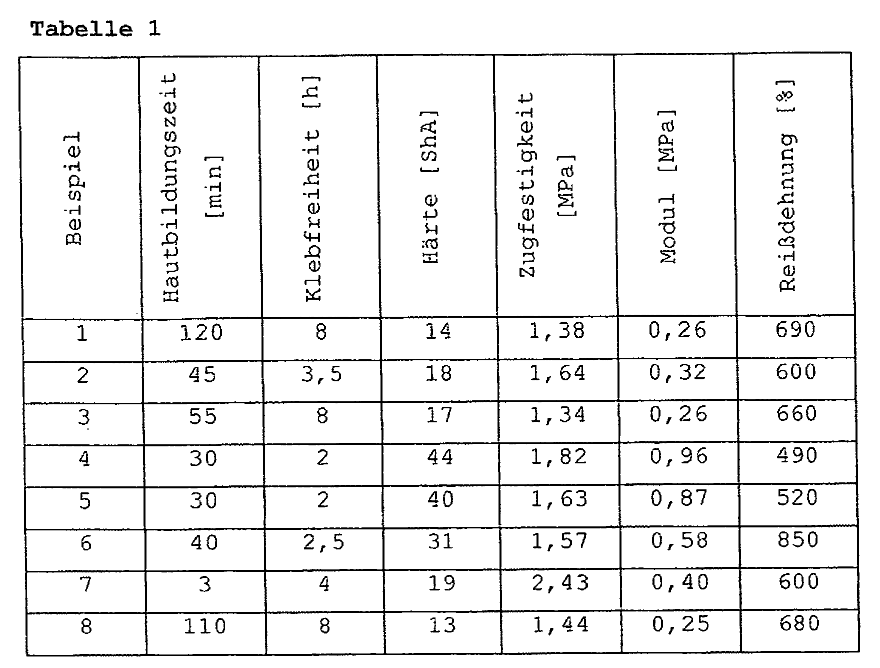

## Patentansprüche

1. Durch Kondensationsreaktion vernetzbare Massen herstellbar unter Verwendung von
(A) Organosiliciumverbindung mit mindestens zwei OH-Gruppen mit einer Viskosität von 10³ bis 10⁶ mPas bei 25°C,
(B) heterocyclischen Verbindungen der Formel
A[CR¹₂SiRₐ(OR²)₃₋ₐ]ₓ (I),
wobei
A einen auf einem.Heterocyclus AHₓ basierenden Rest darstellt enthaltend mindestens ein ringbildendes Element der 3. und/oder 5. Hauptgruppe, bei dem x Wasserstoffatome durch chemische Bindungen zum CR¹₂-Rest ersetzt sind, wobei sich mindestens eine dieser Bindungen an einem ringbildenden Element der 3. oder 5. Hauptgruppe befindet, mit der Maßgabe, dass Rest A keine Ringkohlenstoffatome mit über Doppelbindung gebundenen Sauerstoff- oder Schwefelatomen enthält, die eine direkte Bindung zu einem ringbildenden Heteroatom der 3 oder 5. Hauptgruppe, welches an einem CR¹₂- Rest der Formel (I) gebunden ist, haben,
R gleiche oder verschiedene, einwertige, gegebenenfalls substituierte Kohlenwasserstoffreste bedeutet,
R¹ gleich oder verschieden sein kann und Wasserstoffatom oder einwertige, gegebenenfalls substituierte Kohlenwasserstoffreste bedeutet,
R² gleich oder verschieden sein kann und einwertige, gegebenenfalls substituierte Kohlenwasserstoffreste bedeutet,
a gleich 0 oder 1 ist und
x gleich 1, 2 oder 3 ist,
und/oder deren Teilhydrolysate,
gegebenenfalls
(C) weitere Vernetzer,
gegebenenfalls
(D) Katalysator,
gegebenenfalls
(E) basischen Stickstoff aufweisende Verbindung, gegebenenfalls
(F) Füllstoffe,
gegebenenfalls
(G) Haftvermittler,
gegebenenfalls
(H) Weichmacher und
gegebenenfalls
(I) Additive.

2. Vernetzbare Massen gemäß Anspruch 1, **dadurch gekennzeichnet, dass** es sich bei Rest A um cyclische Verbindungen mit ringbildenden Atomen aus mindestens zwei verschiedenen Elementen handelt, mit der Maßgabe, dass mindestens ein ringbildendes Atom ein Element der 3. und/oder 5. Hauptgruppe darstellt, welches eine Bindungsstelle zum Kohlenstoffatom des Rests -CR¹₂- in Formel (I) aufweist.

3. Vernetzbare Massen gemäß Anspruch 1 oder 2, **dadurch gekennzeichnet, dass** es sich bei Rest A um 3-, 4-, 5-, 6-, 7- oder 8-gliedrige Heterocyclen handelt, die als ringbildende Atome neben Kohlenstoff Stickstoff und/oder Phosphor und/oder Sauerstoff und/oder Schwefel als Heteroatom aufweisen, mit der Maßgabe, dass mindestens ein ringbildendes Atom ein Element der 3. und/oder 5. Hauptgruppe darstellt, wobei auch weitere Ringe annelliert sein können.

4. Vernetzbare Massen gemäß einem oder mehreren der Ansprüche 1 bis 3, **dadurch gekennzeichnet, dass** x gleich 1 ist.

5. Vernetzbare Massen gemäß einem oder mehreren der Ansprüche 1 bis 4, **dadurch gekennzeichnet, dass** es sich bei Organosiliciumverbindungen (A) um solche enthaltend Einheiten der Formel
R³_{b}(OH)_{c}SiO_{(4-b-c)/2} (II)
handelt, wobei
R³ gleich oder verschieden sein kann und gegebenenfalls substituierte Kohlenwasserstoffreste, die durch Sauerstoffatome unterbrochen sein können, bedeutet,
b 0, 1, 2 oder 3 und
c 0, 1, 2 oder 3 ist,
mit der Maßgabe, dass die Summe aus b+c≤3 ist und pro Molekül mindestens zwei kondensationsfähige Reste OH anwesend sind.

6. Vernetzbare Massen gemäß einem oder mehreren der Ansprüche 1 bis 5, **dadurch gekennzeichnet, dass** es sich um solche handelt, herstellbar unter Verwendung von
(A) Organosiliciumverbindungen enthaltend Einheiten der Formel (II),
(B) Verbindungen der Formel (I),
gegebenenfalls
(C) Vernetzer,
gegebenenfalls
(D) Katalysator,
(E) basischen Stickstoff aufweisende Verbindung,
(F) hydrophile pyrogene Kieselsäure,
gegebenenfalls
(G) Haftvermittler,
(H) Weichmacher und
gegebenenfalls
(I) Additiven.

7. Verfahren zur Herstellung der vernetzbaren Massen gemäß einem oder mehreren der Ansprüche 1 bis 6, **dadurch gekennzeichnet, dass** alle Bestandteile in beliebiger Reihenfolge miteinander vermischt werden.

8. Verfahren gemäß Anspruch 7, **dadurch gekennzeichnet, dass** bei kontinuierlicher Verfahrensweise zunächst Organosiliciumverbindung (A) mit Verbindung (B) sowie gegebenenfalls Weichmacher (H) kontinuierlich vermischt wird, wobei die Reaktionszeit von Organosiliciumverbindung (A) mit Verbindungen (B) 1 bis 60 Minuten beträgt, bevor gegebenenfalls weitere Mischnungsbestandteile eingemischt werden.

9. Formkörper, hergestellt durch Vernetzung der Massen gemäß einem oder mehreren der Ansprüche 1 bis 6.

## Claims

1. Materials which can be crosslinked by condensation reaction and can be prepared using
(A) an organosilicon compound having at least two OH groups with a viscosity of from 10³ to 10⁶ mPa.s at 25°C,
(B) heterocyclic compounds of the formula
A[CR¹₂SiRₐ(OR₂)₃₋ₐ]ₓ (I)
in which
A is a radical based on a heterocycle AHₓ containing at least one ring-forming element of the 3^{rd} and/or 5^{th} main group, in which x hydrogen atoms are replaced by chemical bonds to the CR¹₂ radical, at least one of these bonds being present at a ring-forming element of the 3^{rd} or 5^{th} main group, with the proviso that radical A does not contain any ring carbon atoms with double-bonded oxygen or sulphur atoms having a direct bond to a ring-forming heteroatom of the 3^{rd} or 5^{th} main group bonded to a CR¹₂ radical of the formula (I),
R are identical or different, monovalent, optionally substituted hydrocarbon radicals,
R¹ may be identical or different and are a hydrogen atom or monovalent, optionally substituted hydrocarbon radicals,
R² may be identical or different and are monovalent, optionally substituted hydrocarbon radicals,
a is 0 or 1, and
x is 1, 2 or 3,
and/or the partial hydrolysates thereof,
optionally
(C) further crosslinking agents,
optionally
(D) a catalyst,
optionally
(E) a compound having basic nitrogen,
optionally
(F) fillers,
optionally
(G) adhesion promoters,
optionally
(H) plasticizers and
optionally
(I) additives.

2. Crosslinkable materials according to Claim 1, **characterized in that** radicals A are cyclic compounds having ring-forming atoms of at least two different elements, with the proviso that at least one ring-forming atom is an element of the 3^{rd} and/or 5^{th} main group which has a bonding site to the carbon atom of the radical -CR¹₂- in formula (I).

3. Crosslinkable materials according to Claim 1 or 2, **characterized in that** radicals A are 3-, 4-, 5-, 6-, 7-or 8-membered heterocycles which have, as ring-forming atoms, nitrogen and/or phosphorus and/or oxygen and/or sulfur as a heteroatom in addition to carbon, with the proviso that at least one ring-forming atom is an element of the 3^{rd} and/or 5^{th} main group, it also being possible for further rings to be fused on.

4. Crosslinkable materials according to one or more of Claims 1 to 3, **characterized in that** x is 1.

5. Crosslinkable materials according to one or more of Claims 1 to 4, **characterized in that** organosilicon compounds (A) are those containing units of the formula
R³_{b}(OH)_{c}SiO_{(4-b-c)/2} (II)
in which
R³ may be identical or different and are optionally substituted hydrocarbon radicals which may be interrupted by oxygen atoms,
b is 0, 1, 2 or 3 and
c is 0, 1, 2 or 3,
with the proviso that the sum of b+c is ≤3 and at least two condensable OH radicals are present per molecule.

6. Crosslinkable materials according to one or more of Claims 1 to 5, **characterized in that** they are those which can be prepared using
(A) organosilicon compounds containing units of the formula (II),
(B) compounds of the formula (I),
optionally
(C) crosslinking agents,
optionally
(D) a catalyst,
(E) a compound having basic nitrogen,
(F) hydrophilic pyrogenic silica,
optionally
(G) adhesion promoters,
(H) plasticizers and
optionally
(I) additives.

7. Process for the preparation of the crosslinkable materials according to one or more of Claims 1 to 6, **characterized in that** all constituents are mixed with one another in any desired sequence.

8. Process according to Claim 7, **characterized in that**, in the continuous procedure, first organosilicon compound (A) is continuously mixed with compound (B) and optionally plasticizer (H), the reaction time of organosilicon compound (A) with compounds (B) being from 1 to 60 minutes, before further constituents of the mixture are optionally mixed in.

9. Moulding produced by crosslinking the materials according to one or more of Claims 1 to 6.

## Revendications

1. Masses réticulables par une réaction de condensation, pouvant être préparées en utilisant
(A) un composé organosilicié présentant au moins deux groupes OH, présentant une viscosité de 10³ à 10⁶ mPa.s à 25°C,
(B) des composés hétérocycliques de formule
A [CR¹₂SiRₐ(OR²)₃₋ₐ]ₓ (I),
où
A représente un radical basé sur un hétérocycle AHₓ contenant au moins un élément formant un cycle du 3ème et/ou du 5ème groupe principal, dans lequel x atomes d'hydrogène sont remplacés par des liaisons chimiques au radical CR¹₂, au moins une de ces liaisons se trouvant sur un élément formant un cycle du 3ème ou du 5ème groupe principal, sous réserve que le radical A ne contient pas d'atomes de carbone de cycle liés, via une double liaison, à des atomes d'oxygène ou de soufre, qui présentent une liaison directe à un hétéroatome formant un cycle du 3ème ou 5ème groupe principal qui est lié à un radical CR¹₂ de la formule (I),
R signifie des radicaux hydrocarbonés identiques ou différents, monovalents, le cas échéant substitués,
R¹ peut être identique ou différent et signifie un atome d'hydrogène ou des radicaux hydrocarbonés monovalents, le cas échéant substitués,
R² peut être identique ou différent et signifie des radicaux hydrocarbonés monovalents, le cas échéant substitués,
a vaut 0 ou 1 et
x vaut 1, 2 ou 3,
et/ou leurs hydrolysats partiels, le cas échéant
(C) d'autres réticulants, le cas échéant
(D) un catalyseur, le cas échéant
(E) un composé présentant de l'azote basique, le cas échéant
(F) des charges, le cas échéant
(G) des promoteurs d'adhérence, le cas échéant
(H) des plastifiants et le cas échéant
(I) des additifs.

2. Masses réticulables selon la revendication 1, **caractérisées en ce qu'**il s'agit, pour le radical A, de composés cycliques présentant des atomes formant un cycle d'au moins deux éléments différents, sous réserve qu'au moins un atome formant un cycle représente un élément du 3ème et/ou du 5ème groupe principal, qui présente un site de liaison à l'atome de carbone du radical -CR¹₂- dans la formule (I) .

3. Masses réticulables selon la revendication 1 ou 2, **caractérisées en ce qu'**il s'agit, pour le radical A, d'hétérocycles de 3, 4, 5, 6, 7 ou 8 chaînons, qui présentent, comme atomes formant un cycle, outre le carbone, de l'azote et/ou du phosphore et/ou de l'oxygène et/ou du soufre comme hétéroatome, sous réserve qu'au moins un atome formant un cycle représente un élément du 3ème et/ou du 5ème groupe principal, d'autres cycles pouvant également être condensés.

4. Masses réticulables selon l'une ou plusieurs des revendications 1 à 3, **caractérisées en ce que** x vaut 1.

5. Masses réticulables selon l'une ou plusieurs des revendications 1 à 4, **caractérisées en ce qu'**il s'agit, pour les composés organosiliciés (A), de ceux contenant des unités de formule
R³_{b}(OH)_{c}SiO_{(4-b-c)/2} (II)
où
R³ peut être identique ou différent et signifie des radicaux hydrocarbonés, le cas échéant substitués, qui peuvent être interrompus par des atomes d'oxygène,
b vaut 0, 1, 2 ou 3 et
c vaut 0, 1, 2 ou 3,
sous réserve que la somme de b + c ≤ 3 et qu'il existe au moins deux radicaux OH condensables par molécule.

6. Masses réticulables selon l'une ou plusieurs des revendications 1 à 5, **caractérisées en ce qu'**il s'agit de masses pouvant être préparées en utilisant
(A) des composés organosiliciés contenant des unités de formule (II),
(B) des composés de formule (I), le cas échéant
(C) des réticulants, le cas échéant
(D) un catalyseur,
(E) un composé présentant de l'azote basique,
(F) de la silice pyrogène hydrophile, le cas échéant
(G) des promoteurs d'adhérence,
(H) des plastifiants et le cas échéant
(I) des additifs.

7. Procédé pour la préparation des masses réticulables selon l'une ou plusieurs des revendications 1 à 6, **caractérisé en ce que** tous les constituants sont mélangés les uns avec les autres dans un ordre quelconque.

8. Procédé selon la revendication 7, **caractérisé en ce que** dans un mode opératoire continu, on mélange d'abord, en continu, le composé organosilicié (A) avec le composé (B) ainsi que le cas échéant le plastifiant (H), le temps de réaction du composé organosilicié (A) avec les composés (B) valant de 1 à 60 minutes, avant d'y incorporer le cas échéant d'autres constituants de mélange.

9. Corps façonnés, préparés par réticulation des masses selon l'une ou plusieurs des revendications 1 à 6.
